# FASCICULE DE BREVET EUROPEEN

(11) **EP 0 623 837 B1**
(45) Date de publication et mention de la délivrance du brevet: **01.10.1997**
(21) Numéro de dépôt: 94420130.0
(22) Date de dépôt: 27.04.1994
(51) Int. Cl.: G02C 5/22

(54) **Charnière élastique de lunettes**
Federscharnier für Brille
Resilient hinge for spectacles

(30) Priorité: 04.05.1993 FR 9305544
(43) Date de publication de la demande: 09.11.1994
(73) Titulaire: ALBIN PAGET S.A., 39400 Morez (FR)
(72) Inventeur: Buffard, Maurice, La Doye, F.39400 Morez (FR)
(74) Mandataire: Kiehl, Hubert

(56) Documents cités:
- EP-A- 0 426 947
- DE-C- 3 628 682
- DE-U- 8 813 181
- FR-A- 2 258 642

## Description

La présente invention est relative à une charnière élastique de lunettes reliant une branche de lunette au cercle de verre. De telles charnières permettent d'écarter les branches élastiquement vers l'extérieur au-delà de leur position dite "ouverte". Ces charnières sont très appréciées du public, notamment du fait qu'elles permettent de maintenir une bonne géométrie de la monture même si celle-ci est fréquemment utilisée, et du fait que les branches se plaquent contre les tempes avec une pression raisonnable.

L'un des types de charnières élastiques connues comprend une coulisse mobile en translation à l'intérieur d'un logement ménagé (ou rapporté) à l'extrémité de la branche, l'extrémité émergente de la coulisse portant un charnon mâle ou femelle. Dans la coulisse est réalisé un espace longitudinal de manière à y loger un ressort dont l'extrémité arrière prend appui contre une paroi ou une restriction arrière de la coulisse, et dont l'extrémité avant vient s'appuyer contre une butée rendue solidaire du logement. Fréquemment, la butée se résume à un axe, voir une goupille ou une vis, traversant le logement et au moins une partie de l'espace longitudinal de la coulisse, et ce devant l'extrémité externe du ressort. Ce type de charnière élastique est, par exemple, décrit dans les documents EP 0 091 573, FR 2 258 642 et FR 1 511 263.

L'assemblage d'une telle charnière consiste à introduire le charnon-coulisse complété de son ressort dans le logement, et à verrouiller ce mécanisme de pièces mobiles en insérant l'axe ou la vis de l'extérieur après précontrainte du ressort, cette dernière opération étant plutôt délicate, donc réservée à un personnel qualifié.

Le but de la présente invention est une charnière, notamment du type mentionné précédemment, dont le montage du mécanisme de pièces mobiles soit particulièrement aisé sans devoir nécessiter ni équipements spéciaux, ni tours de mains réservés seulement à des personnes hautement qualifiées. De plus, ce mécanisme doit rester fiable, c'est-à-dire indéfaisable accidentellement une fois mis en place, notamment par la définition de pièces suffisamment bien proportionnées pour être solides en tout point et aisément manipulables lors de l'assemblage. De plus, ce mécanisme doit également pouvoir être déverrouillé à volonté, notamment pour changer le mécanisme une fois usé. Enfin, il est souhaitable que ce mécanisme soit composé de pièces aisément réalisables, donc à moindres frais.

Ces buts sont réalisés par une charnière élastique de lunettes dont le charnon de branche est prolongé d'une coulisse mobile dans un logement contre l'action d'un ressort logé dans un espace longitudinal central de cette coulisse et agissant entre l'extrémité arrière de la coulisse et une butée faisant office de verrou, caractérisée en ce que le verrou est réalisé sous la forme d'une plaque en forme de secteur circulaire d'angle au sommet supérieur à 100 degrés inséré dans une fente ménagée au travers de la coulisse, l'extrémité avant du ressort appuyant contre l'un des rayons du verrou de telle sorte à ce que l'extrémité de l'autre rayon émerge hors de la fente pour s'accrocher dans un orifice ménagé dans la paroi latérale du logement.

Ainsi, lorsque l'on insère le mécanisme dans le logement, le rayon latéral du verrou ripe contre le côté correspondant de l'embouchure du logement, ce qui force une rotation de ce verrou dans son plan qui s'efface et qui comprime par là-même le ressort. Lorsque l'extrémité du rayon latéral atteint l'orifice ménagé dans la paroi, la poussée du ressort force une rotation inverse du verrou ce qui enclenche cette extrémité. Par ailleurs, la géométrie du verrou fait que, poussé par le ressort, il reste en place sans autre à l'intérieur de la coulisse lors de l'introduction dans le logement.

Pour des considérations d'encombrement, il s'est avéré judicieux, en considérant que l'axe longitudinal de la charnière est à l'horizontale et le charnon à la verticale, que le verrou en forme de secteur circulaire soit orienté à l'horizontale, et que l'orifice d'accrochage soit réalisé dans une paroi latérale d'anti-rotation du charnon, paroi prolongeant l'embouchure du logement, la fente étant alors taillée à cheval entre la coulisse et le corps du charnon. Cette disposition très en avant de l'orifice d'accrochage permet de raccourcir la charnière. La mise à l'horizontale du verrou permet de ménager sans risque une large fente dans une partie épaisse de la coulisse, et permet aussi d'utiliser un verrou épais donc fiable.

Utilement, soit la tranche du bord avant en arc-de-cercle du verrou est arrondie pour se positionner parfaitement dans l'extrémité d'une fente réalisée par le déplacement longitudinal d'une fraise laissant des extrémités arrondies, soit cette tranche est rectiligne et s'insère dans une fente rectangulaire d'une coulisse réalisée en microfonderie à cire perdue.

Avantageusement, le logement est cylindrique et la coulisse tubulaire. L'extrémité arrière de la coulisse tubulaire peut être réalisée par emboutissage des bords vers l'intérieur; lorsque cette pièce est réalisée par microfonderie, l'extrémité arrière présente deux orifices latéraux en vis-à-vis pour le passage d'un axe rapporté d'obstruction.

L'invention sera mieux comprise à l'étude d'un mode de réalisation pris à titre d'exemple nullement limitatif et décrit par les figures suivantes :
- la figure 1 est une vue de côté en coupe longitudinale d'une charnière élastique selon l'invention,
- la figure 2 est une vue de dessus en coupe longitudinale selon la ligne II-II de la figure 1, et
- la figure 3 est une vue en coupe transversale selon la ligne III-III de la figure 2.

Comme illustré sur les figures, un charnon 26 est usiné à l'extrémité d'une coulisse tubulaire 20. Cette coulisse est mobile en translation à l'intérieur d'un logement cylindrique 12 percé à l'extrémité d'une branche de lunettes 10. L'embouchure de ce logement 12 est prolongée par deux parois latérales 14 prévenant toute rotation du charnon autour de l'axe longitudinal de la coulisse.

Selon l'invention, on perce puis on fraise une fente longitudinale 22 à cheval entre la coulisse et le corps arrière 26' du charnon 26, et ce avec une fraise foret laissant deux extrémités arrondies. Dans cette fente 22 est introduit un verrou 40 se présentant sous la forme d'une plaque dont la géométrie correspond à un secteur circulaire d'angle au sommet de l'ordre de 120 degrés, en tous les cas supérieur à 100 degrés. L'épaisseur de ce verrou correspond à la hauteur de la fente 22 soit de l'ordre du millimètre. Les bords circulaires 41 sont arrondis pour se caler parfaitement dans l'extrémité avant de la fente, l'un des rayons 42 étant orienté orthogonalement par rapport à l'axe de la coulisse.

En alternative, le bloc comprenant le charnon, la coulisse et la fente est réalisé par microfusion dans une fonderie à cire perdue. La fente peut alors présenter une section rectangulaire acceptant un verrou dont la tranche est simplement rectiligne.

Des verrous peuvent être aisément réalisés par tronçonnages successifs d'un profilé plein en tiers de cercle ou en les découpant avec un poinçon et un contre-poiçon dans une plaque métallique d'épaisseur correspondant à celle du verrou.

Un ressort est enfilé dans l'espace tubulaire interne de la coulisse, l'extrémité avant prenant appui contre le rayon transversal 42 du verrou 40, l'autre extrémité de ce ressort étant maintenue par une restriction 27 de l'extrémité arrière de la coulisse 20. Cette restriction est réalisée ultérieurement, notamment par sertissage ou engagement d'un axe au travers de deux orifices latéraux situés en vis-à-vis. On notera que l'emploi d'une coulisse tubulaire assure un guidage du ressort permettant de s'affranchir d'une tige-guide interne prolongée par un piston.

Par ailleurs, un orifice 13 est ménagé dans la paroi latérale 14 peu après l'embouchure de sortie du logement 12. Un orifice rond traversant est aisément réalisé par perçage.

Tel que décrit, la charnière selon l'invention est installée de la manière suivante.

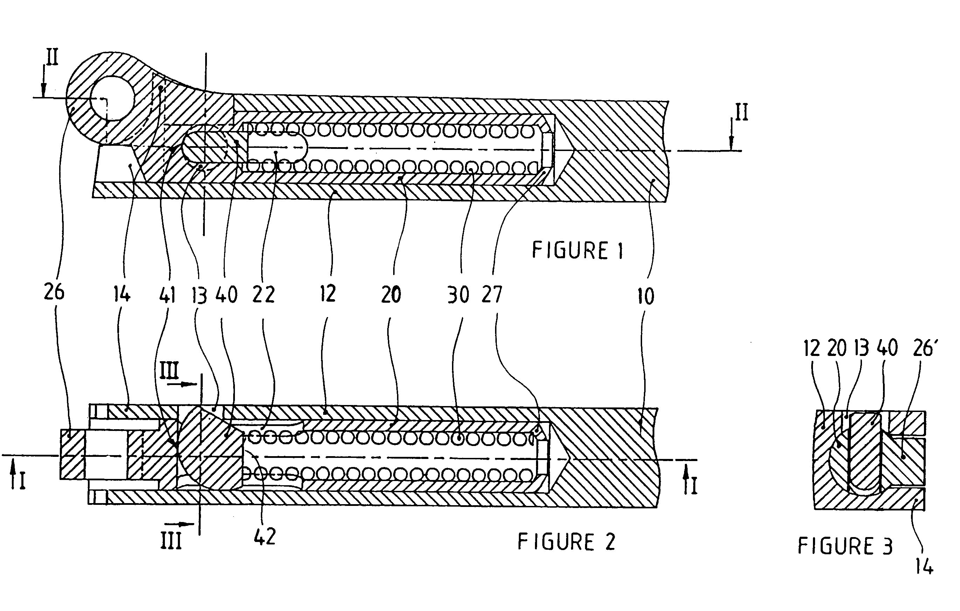

Comme on peut bien l'observer sur la figure 2, le point de contact de l'arc-de-cercle 41 contre l'extrémité de la fente 22 est suffisamment proche de l'axe d'appui du ressort pour que les frictions de contact maintiennent sans autre ce verrou dans la fente malgré l'appui du ressort, ce qui facilite grandement la manipulation du mécanisme assemblé avant son introduction dans le logement.

Lorsque l'on introduit dans le logement 12 les coulisse/charnon 20,26 contenant le ressort 30 et le verrou 40, le rayon latéral de ce verrou émergeant hors de la fente 22 vient d'abord buter à l'extrémité de la paroi latérale 14 d'embouchure du logement. Une pression supplémentaire sur le charnon fait que le bord de la paroi latérale induit une rotation du verrou dans son plan. Cette rotation est guidée par deux points de contact de la partie en arc-de-cercle : un point de contact contre l'extrémité avant du logement du ressort et un point de contact au travers de la fente contre la paroi latérale opposée.

Ce verrou 40 s'efface donc dans la largeur de la coulisse, le rayon latéral ripant contre le bord de la paroi 14, l'autre rayon 42 comprimant le ressort 30. La coulisse 20 peut alors être insérée plus profondément dans le logement 12 jusqu'à amener l'extrémité du rayon latéral du verrou 40 en vis-à-vis de l'orifice 13. La compression du ressort 30 imprime alors au verrou 40 une rotation en sens inverse introduisant l'extrémité de ce rayon latéral dans l'orifice 13 pour accrochage. Le verrou 40 est donc, à ce moment, devenu solidaire du logement 12 et agit maintenant en tant que butée pour le ressort 30. Tout retrait ultérieur des charnon/coulisse se fera donc contre une compression de ce ressort.

L'un des intérêts de la charnière selon l'invention est que l'on peut, à tout moment, volontairement la défaire en appuyant sur l'extrémité latérale du verrou 40 avec un poinçon pour forcer une rotation de celui-ci. Ce verrou peut alors être dégagé de l'orifice d'accrochage 13 ce qui permet de sortir aisément le mécanisme de pièces mobiles pour remplacement.

Si l'invention a été décrite dans le cadre d'un logement percé dans l'extrémité brute d'une branche 10, on peut, bien évidemment, l'adapter sans autre à des charnières élastiques dont le logement est réalisé par soudure d'un capot rapporté. Par ailleurs, l'invention n'est nullement limitée au coulisse dont l'extrémité est fermée par sertissage, mais également au coulisse fermée par d'autres moyens, par exemple à l'aide d'une vis. De nombreuses améliorations peuvent être apportées à cette charnière dans le cadre de cette invention.

## Revendications

1. Charnière élastique de lunettes dont le charnon de branche (26) est prolongé d'une coulisse (20) mobile dans un logement (12) contre l'action d'un ressort (30) logé dans un espace longitudinal central de cette coulisse et agissant entre l'extrémité arrière (27) de la coulisse et une butée faisant office de verrou (40), caractérisée en ce que le verrou (40) est réalisé sous la forme d'une plaque en forme de secteur circulaire d'angle au sommet supérieur à 100 degrés inséré dans une fente (22) ménagée au travers de la coulisse (20), l'extrémité avant du ressort (30) appuyant contre l'un des rayons du verrou de telle sorte à ce que l'extrémité de l'autre rayon émerge hors de la fente pour s'accrocher dans un orifice (13) ménagé dans la paroi latérale du logement (12).

2. Charnière élastique de lunettes selon la revendication 1, caractérisée, en considérant que l'axe longitudinal de la charnière est à l'horizontale et le charnon à la verticale, en ce que le verrou (40) en forme de secteur circulaire est orienté à l'horizontale, et en ce que l'orifice d'accrochage (13) est réalisé dans une paroi latérale (14) d'anti-rotation du charnon, paroi prolongeant l'embouchure du logement (12), la fente (22) étant taillée à cheval entre la coulisse (20) et le corps (26') du charnon (26).

3. Charnière élastique de lunettes selon la revendication 1 ou 2, caractérisée en ce que la tranche du bord avant en arc-de-cercle (41) du verrou (40) est arrondie.

4. Charnière élastique de lunettes selon la revendication 1, caractérisée en ce que le logement (12) est cylindrique et la coulisse (20) tubulaire.

5. Charnière élastique de lunettes selon la revendication 4, caractérisée en ce que l'extrémité arrière (27) de la coulisse (20) tubulaire est réalisée par emboutissage des bords vers l'intérieur.

## Patentansprüche

1. Federscharnier für Brille, wobei das Scharnierteil (26) des Bügels (10) durch einen Schieber (20) verlängert ist, der in einem Lager (12) gegen die Kraft eines Federelements (30) beweglich ist, das in einem zentralen Längsraum dieses Schiebers (20) gelagert ist und zwischen dem hinteren Ende (27) des Schiebers und einem als Riegel (40) dienenden Widerlager wirksam ist,
dadurch gekennzeichnet, daß der Riegel (40) in Form einer kreisbogenförmigen Scheibe ausgebildet ist, deren Zentriwinkel mehr als 1000 aufweist und in einen Spalt (22) eingesetzt ist, der quer zum Schieber (20) ausgespart ist, wobei das vordere Ende des Federelements (30) gegen einen der Radien des Riegels (40) so abgestützt ist, daß die Außenseite des anderen Radius bis in den Spalt (22) eintaucht, um sich in einer Öffnung (13) einzuhängen, die in der Seitenwandung des Lagers (12) ausgenommen ist.

2. Federscharnier für Brille nach Anspruch 1, dadurch gekennzeichnet, daß - wenn die Längsachse des Scharniers horizontal und das Scharnierteil vertikal ist - der kreisbogenförmige Riegel (40) horizontal ausgerichtet ist und daß die Einhängeöffnung (13) in einer Seitenwandung (14) zur Drehverhinderung des Scharnierteils ausgebildet ist, wobei die Wandung die Öffnung des Lagers (12) verlängert und der Spalt (22) an der Seite zwischen dem Schieber (20) und dem Körper (26') des Scharnierteils (26) eingebracht ist.

3. Federscharnier für Brille nach Anspruch 1 oder 2, dadurch gekennzeichnet, daß die Scheibe am vorderen Rand im Kreisbogen (41) des Riegels (40) ausgerundet ist.

4. Federscharnier für Brille nach Anspruch 1, dadurch gekennzeichnet, daß das Lager (12) zylindrisch und der Schieber (20) rohrförmig ist.

5. Federscharnier für Brille nach Anspruch 4, dadurch gekennzeichnet, daß das hintere Ende (27) des rohrförmigen Schiebers (20) durch Einbördeln der Ränder nach innen gebildet ist.

## Claims

1. Spectacle spring hinge whereof the side knuckle (26) is extended by a slide (20) able to move in a housing (12) against the action of a spring (30) housed in a central longitudinal space of this slide and acting between the rear end (27) of the slide and a stop acting as a bolt (40), characterised in that the bolt (40) is made in the form of a plate in the shape of a circular sector having an angle at the apex greater than 100°, inserted in a slot (22) provided through the slide (20), the front end of the spring (30) bearing against one of the radii of the bolt so that the end of the other radius emerges from the slot in order to engage in an orifice (13) provided in the side wall of the housing (12).

2. Spectacle spring hinge according to Claim 1, characterised, considering that the longitudinal axis of the hinge is horizontal and the knuckle is vertical, in that the bolt (40) in the form of a circular sector is oriented horizontally and in that the engagement orifice (13) is formed in an anti-rotation side wall (14) of the knuckle, the wall extending the mouth of the housing (12), the slot (22) being cut astride between the slide (20) and the body (26') of the knuckle (26).

3. Spectacle spring hinge according to Claim 1 or 2, characterised in that the edge of the arcuate front side (41) of the bolt (40) is rounded.

4. Spectacle spring hinge according to Claim 1, characterised in that the housing (12) is cylindrical and the slide (20) tubular.

5. Spectacle spring hinge according to Claim 4, characterised in that the rear end (27) of the tubular slide (20) is produced by pressing the edges towards the inside.
